# EUROPEAN PATENT APPLICATION

(11) **EP 3 708 808 A1**
(43) Date of publication of application: **16.09.2020**
(21) Application number: 20156832.6
(22) Date of filing: 12.02.2020
(51) Int. Cl.: F02C 7/14, F02C 7/18, F02C 6/08, F02C 7/143

(54) **FUEL MANIFOLD COOLING**

(30) Priority: 12.03.2019 GB 201903328
(71) Applicant: Rolls-Royce plc, London N1 9FX (GB)
(72) Inventor: Culwick, Steven, Derby, Derbyshire DE24 8BJ (GB); Booth, Michael, Derby, Derbyshire DE24 8BJ (GB)
(74) Representative: Rolls-Royce plc

(57) **Abstract**

A gas turbine engine comprising an engine core comprising a compressor; a compressor bleed valve in fluid communication with the compressor and configured to release bleed air from the compressor; and a combustor comprising a fuel manifold configured to provide fuel to the combustor; wherein the fuel manifold is in thermal contact with a cooling conduit; and the gas turbine engine further comprises a fluid conduit to supply bleed air from the compressor bleed valve to the cooling conduit.

## Description

The present disclosure relates to the handling of fuel in fuel manifolds in gas turbine engines, and provides a gas turbine engine as set out in the appended claims.

### BACKGROUND OF THE INVENTION

During soakback and some operational conditions, the temperature in fuel manifolds can become high. This may lead to the creation of fuel breakdown products (sometimes referred to as "coking") within the manifolds that can cause failures in fuel system components. This is typically not a problem during cruise conditions, during which fuel flows through the fuel manifold at a sufficient rate to provide cooling, and in which the fuel flow rate is such that the time taken for fuel to pass through the fuel manifold is relatively short. However, particular problems may be caused at the end of cruise, when fuel flows are reduced and the fuel manifold ceases to be fuel-cooled in a meaningful way, while at the same time heat from the surrounding metal and air, still hot as a result of normal engine operation, soaks into the fuel manifold.

Previous approaches to this problem have included: designing the fuel system components to survive the worst case temperatures and coking products; providing recirculation manifolds and valves in order to manage the amount of time fuel spends in the hot zone; providing heat transfer systems or chillers to create or cool a low-temperature working fluid; and/or draining fuel from the fuel manifold post-cruise. However, each of these approaches has disadvantages, for example a cost and/or weight penalty due to the inclusion of additional components. In the case of a system recirculating fuel, there can be an undesirable failure mode if the cooling flow is erroneously directed into the combustor, leading to a hot streak. Systems in which the fuel is drained from the fuel manifold may also lengthen start times, which is undesirable for users, due to the need to prime the system before engine restart.

### BRIEF SUMMARY OF THE INVENTION

According to a first aspect there is provided a gas turbine engine having an engine core, the engine core comprising: a compressor and a compressor bleed valve in fluid communication with the compressor, the compressor bleed valve configured to release bleed air from the compressor; a combustor comprising a fuel manifold configured to provide fuel to the combustor; and a cooling conduit that is in thermal contact with the fuel manifold, wherein the engine core further comprises a fluid conduit to supply bleed air from the compressor bleed valve to the cooling conduit.

In an arrangement, the engine core may comprise first and second compressors, configured such that the second compressor operates at a higher pressure than the first compressor; and the compressor bleed valve is in fluid communication with the first compressor.

In an arrangement, the gas turbine engine may comprise a bypass duct configured to carry a bypass airflow; and the gas turbine engine may be configured such that air provided to the cooling conduit of the fuel manifold is exhausted to the bypass duct.

In an arrangement, the gas turbine engine may comprise a bypass duct configured to carry a bypass airflow; and the gas turbine engine may further comprise an ancillary compressor configured to provide air to the cooling conduit of the fuel manifold and a conduit configured to supply air from the bypass duct to the ancillary compressor.

In an arrangement, the gas turbine engine may further comprise an ancillary compressor configured to increase the pressure of the bleed air supplied to the cooling conduit of the fuel manifold.

In an arrangement, the gas turbine engine may comprise a bypass duct configured to carry a bypass airflow; and the gas turbine engine may further comprise a conduit, configured to supply air from the bypass duct to the ancillary compressor.

In an arrangement, the gas turbine engine may further comprise a control valve configured to control whether air is supplied to the ancillary compressor from the compressor bleed valve and/or from the bypass duct.

In an arrangement, the gas turbine engine may comprise a bypass duct configured to carry a bypass airflow; and the gas turbine engine may further comprise a second ancillary compressor configured to provide air to the cooling conduit of the fuel manifold and a conduit configured to supply air from the bypass duct to the second ancillary compressor.

In an arrangement, the engine core may comprise a turbine, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

In an arrangement, the turbine is a first turbine, the compressor is a first compressor, and the core shaft is a first core shaft; the engine core further comprising a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a principal rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(MS⁻¹)²) . The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the engine core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine; and
Figures 4, 5, 6, 7 and 8 depict alternative arrangements of part of a gas turbine engine according to the present disclosure.

### DETAILED DESCRIPTION OF THE INVENTION

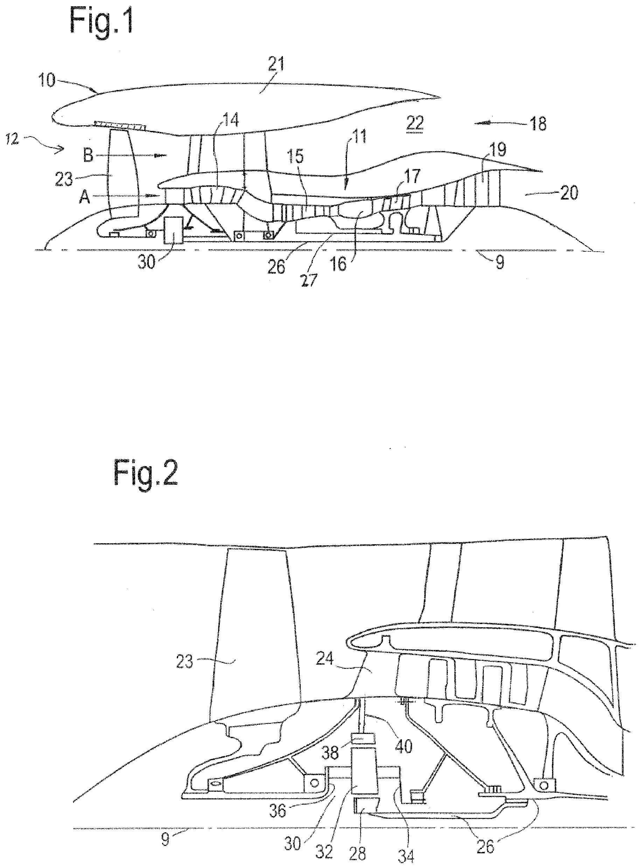

Figure 1 illustrates a gas turbine engine 10 having a principal rotational axis 9. The gas turbine engine 10 comprises an air intake 12 and a propulsive fan 23 that generates two airflows: a core airflow A and a bypass airflow B. The gas turbine engine 10 comprises an engine core 11 that receives the core airflow A. The engine core 11 comprises, in axial flow series, a low pressure compressor 14, a high-pressure compressor 15, combustion equipment (hereafter referred to as a combustor) 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a core shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a second core shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the core shaft 26, which is coupled to a sun wheel, or sun gear, 28 of the epicyclic gearbox 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via first linkages 36 to the fan 23 in order to drive its rotation about the principal rotational axis 9. Radially outwardly of the planet gears 32 and intermeshing therewith is an annulus or ring gear 38 that is coupled, via second linkages 40, to a fixed structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the core shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

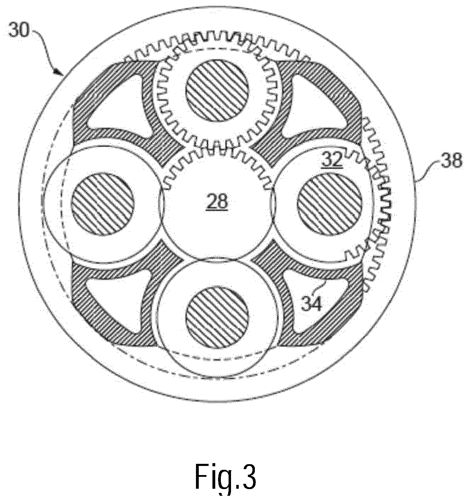

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via first linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring gear 38 allowed to rotate. In such an arrangement the fan 23 is driven by the ring gear 38. By way of further alternative example, the epicyclic gearbox 30 may be a differential epicyclic gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the gas turbine engine 10 and/or for connecting the gearbox 30 to the gas turbine engine 10. By way of further example, the connections (such as the linkages 36, 40 in the Figure 2 example) between the gearbox 30 and other parts of the gas turbine engine 10 (such as the core shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own bypass exit nozzle 18 that is separate to and radially outside the core exhaust nozzle 20. However, this is not limiting, and any aspect of the present disclosure may also apply to engines in which the flow through the bypass duct 22 and the flow through the engine core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30, or it may comprise a gearbox of a non-epicyclic variety.

The geometry of the gas turbine engine 10, and components thereof, is defined by a conventional axis system, comprising an axial direction (which is aligned with the principal rotational axis 9), a radial direction (in the bottom-to-top direction in Figure 1), and a circumferential direction (perpendicular to the page in the Figure 1 view). The axial, radial and circumferential directions are mutually perpendicular.

Gas turbine engines may have compressor bleed valves to release pressure from compressor stages within the gas turbine engine core. A compressor bleed valve may be configured to release bleed air from the compressor during some operating states in order to optimise operation of the engine core.

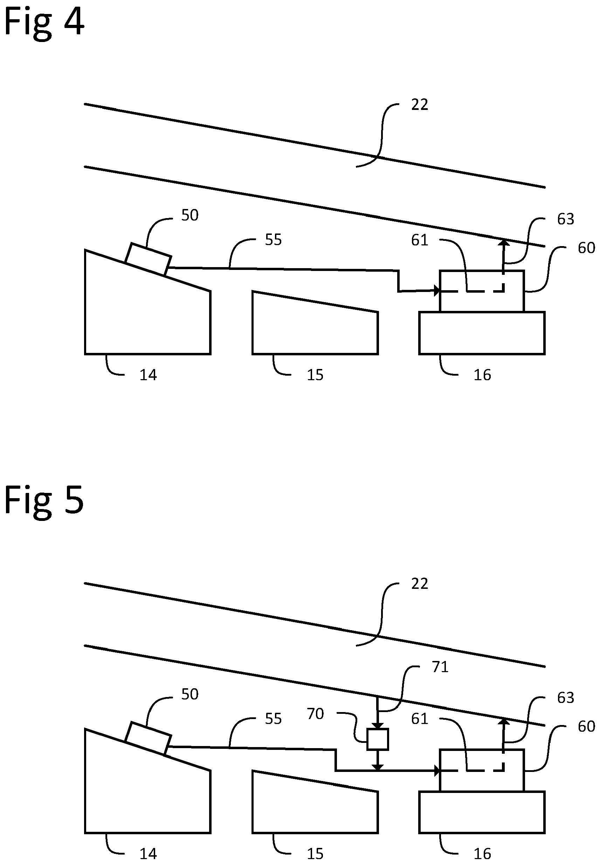

Figure 4 schematically depicts an arrangement of a part of a gas turbine engine, in which bleed air from a compressor bleed valve 50 is utilised rather than exhausted, as is common in gas turbine engines. In particular, as shown, the compressor bleed valve 50 provided to a compressor 14 is connected via a fluid conduit 55 to a fuel manifold 60 that provides fuel to the combustor 16. The bleed air may be supplied to a cooling conduit 61 that is in thermal contact with the fuel manifold. Cooling air that has passed through the cooling conduit 61 may be exhausted to the bypass duct 22, for example via an exit conduit 63.

In a gas turbine engine having two compressors 14, 15 one of the compressors 14 may operate at a lower pressure than the other compressor 15. In such an arrangement, the bleed air used to cool the fuel manifold 60 may be bleed air from the compressor 14 that operates at a lower pressure, as shown in Figure 4. This may be beneficial because the compressor bleed valve 50 may be opened at the end of cruise on a gas turbine engine used on an aircraft, when the power generated by the gas turbine engine is reduced, in order to maintain the operating condition of the gas turbine engine. This coincides with a situation in which it may be beneficial to provide cooling to the fuel manifold 60.

Figure 5 depicts a variation of the arrangement depicted in Figure 4. As shown, in this arrangement, in addition to supplying bleed air to the cooling conduit 61 of the fuel manifold 60, cooling air is also provided from the bypass duct 22. As shown, a first ancillary compressor 70 may be provided to supply air through a conduit 71 from the bypass duct 22 to the cooling conduit 61 of the fuel manifold 60.

Such an arrangement may be used to supplement the cooling effect provided by the bleed air. Alternatively or additionally, the cooling air from the bypass duct 22 may be used when cooling is desirable in the fuel manifold 60 but it is not desirable to open the compressor bleed valve 50 in order to maintain the optimum operating state of the gas turbine engine. Alternatively or additionally, it may be desirable to provide cooling air from the bypass duct 22 to the fuel manifold 60 after shutdown of a gas turbine engine, when no bleed air can be provided from the compressor bleed valve 50 because the compressor 14 is not in operation.

A controller may be provided in order to determine when it is appropriate to utilise air from the bypass duct 22 and control the first ancillary compressor 70 accordingly. This controller may be used in conjunction with a controller controlling compressor bleed valve 50 or a single controller may control both systems.

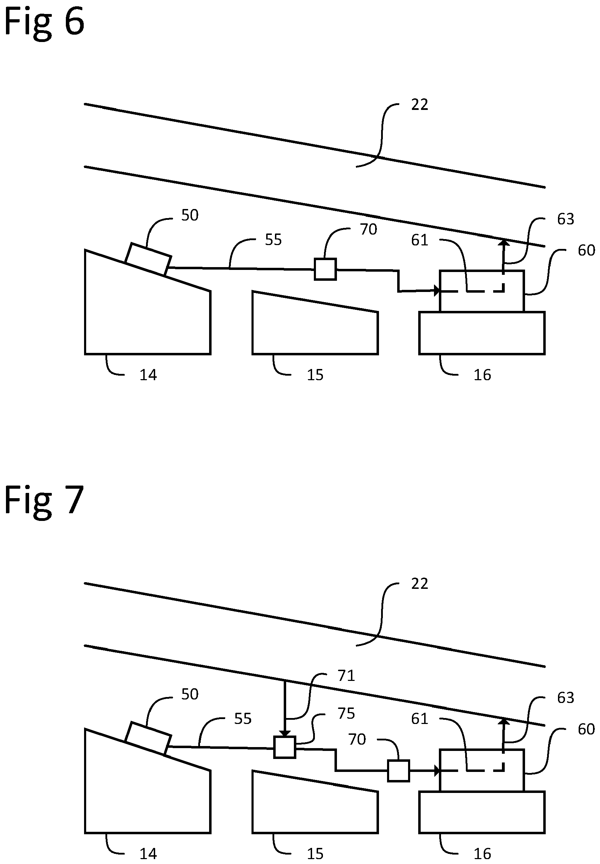

Figure 6 depicts a further variation of the arrangement depicted in Figure 4. As shown, in this arrangement, a first ancillary compressor 70 may be provided to increase the pressure of the bleed air from the compressor bleed valve 50 provided to the cooling conduit 61 of the fuel manifold 60. This may increase the flow of bleed air, and therefore the effect of the cooling. This may be particularly beneficial when the gas turbine engine is operating at low idle powers.

As with the arrangement discussed above in relation to Figure 5, a control system may be provided in order to determine when it is appropriate to utilise the first ancillary compressor 70 and/or control the compressor bleed valve 50.

Figure 7 depicts a further variation in which a first ancillary compressor 70 may be used to provide air from the bypass duct 22 through a conduit 71 to the cooling conduit 61 of the fuel manifold and/or to increase the pressure of bleed air provided from the compressor bleed valve 50 to the cooling conduit 61 of the fuel manifold 60. In such an arrangement, a control valve 75 may connect the conduit 71 providing air from the bypass duct 22 and the fluid conduit 55 providing bleed air from the compressor bleed valve 50 to the first ancillary compressor 70.

The control valve 75 may be used to control whether air from one or both sources is provided to the cooling conduit 61 of the fuel manifold 60. The control valve 75 may be configured such that it can operate in any two or more of the following states: providing air from the bypass duct 22, providing air from the compressor bleed valve 50, providing air from both sources and closed, providing air from neither source. It will be appreciated that a controller used to control the operation of the first ancillary compressor 70 and/or the compressor bleed valve 50 may also control the operation of the control valve 75.

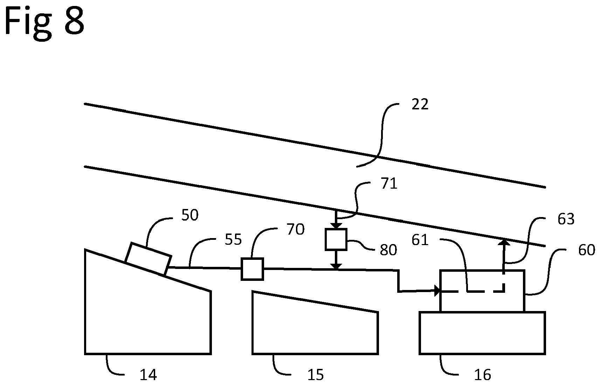

Figure 8 depicts an alternative arrangement to Figure 7, in which a first ancillary compressor 70 is provided to increase the pressure of the air provided from the compressor bleed valve 50 to the cooling conduit 61 of the fuel manifold 60 and a second ancillary compressor 80 provides cooling air from the bypass duct 22 to the cooling conduit 61 of the fuel manifold 60. It should be appreciated that appropriate control of the compressor bleed valve 50 and the first and second ancillary compressors 70, 80, for example using a controller, may enable the provision of the same operating states discussed above in relation to the arrangement depicted in Figure 7.

Advantageously, the above described embodiments do not require the inclusion of any additional heat-reducing hardware systems to provide a cooled working fluid to the cooling conduit, Rather, it has been realised that the temperature of the bleed air from the compressor is sufficiently low in comparison to the fuel manifolds that it can provide a useful cooling effect on the fuel manifolds without the need for any additional heat-exchange or cooling apparatus to further lower the temperature of the bleed air. Thus, such a system is simpler, lighter and more reliable than those of the prior art.

It will be understood that the disclosure is not limited to the embodiments above-described and various modifications and improvements can be made without departing from the concepts described herein but within the scope of the following claims. Except where mutually exclusive, any of the features may be employed separately or in combination with any other features and the disclosure extends to and includes all combinations and sub-combinations of one or more features described herein.

## Claims

1. A gas turbine engine having an engine core (11), the engine core comprising:
a compressor (14);
a compressor bleed valve (50) in fluid communication with the compressor (14), and configured to release bleed air from the compressor;
a combustor (16) comprising a fuel manifold (60), the fuel manifold configured to provide fuel to the combustor; and
a cooling conduit (61) that is in thermal contact with the fuel manifold;
wherein the engine core further comprises a fluid conduit (55) to supply bleed air from the compressor bleed valve to the cooling conduit.

2. A gas turbine engine according to claim 1, wherein the engine core comprises first and second compressors (14, 15), configured such that the second compressor (15) operates at a higher pressure than the first compressor (14); and
the compressor bleed valve (50) is in fluid communication with the first compressor.

3. A gas turbine engine according to claim 1 or 2, wherein the engine comprises a bypass duct (22) configured to carry a bypass airflow; and
the engine is configured such that air provided to the cooling conduit is exhausted to the bypass duct (22).

4. A gas turbine engine according to any one of claims 1 to 3, wherein the engine comprises a bypass duct (22) configured to carry a bypass airflow; and
the engine further comprises:
a first ancillary compressor (70) configured to provide air to the cooling conduit (61); and
a conduit (71) configured to supply air from the bypass duct (22) to the ancillary compressor.

5. A gas turbine engine according to any one of claims 1 to 3, further comprising a first ancillary compressor (70) configured to increase the pressure of the bleed air supplied to the cooling conduit (61).

6. A gas turbine engine according to claim 5, wherein the engine further comprises:
a bypass duct (22) configured to carry a bypass airflow; and
a conduit (71) configured to supply air from the bypass duct (22) to the first ancillary compressor (70).

7. A gas turbine engine according to claim 6, further comprising a control valve (75) configured to control whether air is supplied to the first ancillary compressor (70) from the compressor bleed valve (50) and/or from the bypass duct (22).

8. A gas turbine engine according to claim 5, wherein the gas turbine engine comprises:
a bypass duct (22) configured to carry a bypass airflow;
a second ancillary compressor (80) configured to provide air to the cooling conduit (61); and
a conduit (71) configured to supply air from the bypass duct (22) to the second ancillary compressor.

9. A gas turbine engine (10) according to any preceding claim, wherein:
the engine core (11) comprises a turbine (19) and a core shaft (26), the core shaft connecting the turbine to the compressor (14);
a fan (23) located upstream of the engine core, the fan comprising a plurality of fan blades; and
a gearbox (30) that receives an input from the core shaft (26), and outputs drive to the fan so as to drive the fan at a lower rotational speed than the core shaft.

10. A gas turbine engine according to claim 9, wherein:
the turbine is a first turbine (19), the compressor is a first compressor (14), and the core shaft is a first core shaft (26);
the engine core further comprises a second turbine (17), a second compressor (15), and a second core shaft (27), the second core shaft connecting the second turbine to the second compressor; and
the second turbine, second compressor, and second core shaft are arranged to rotate at a higher rotational speed than the first core shaft.
